(19) **Europäisches Patentamt / European Patent Office / Office européen des brevets**

(11) **EP 2 508 736 A1**

(12) # EUROPEAN PATENT APPLICATION
published in accordance with Art. 153(4) EPC

(43) Date of publication:
**10.10.2012 Bulletin 2012/41**

(51) Int Cl.:
*F02D 17/00* (2006.01)   *F02D 41/06* (2006.01)
*F02D 45/00* (2006.01)

(21) Application number: **09851839.2**

(22) Date of filing: **01.12.2009**

(86) International application number:
**PCT/JP2009/070192**

(87) International publication number:
**WO 2011/067831 (09.06.2011 Gazette 2011/23)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Toyota Jidosha Kabushiki Kaisha Toyota-shi, Aichi 471-8571 (JP)**

(72) Inventor: **KUWAYAMA, Shoichi Toyota-shi Aichi 471-8571 (JP)**

(74) Representative: **Smith, Samuel Leonard J A Kemp 14 South Square Gray's Inn London WC1R 5JJ (GB)**

(54) **CONTROL DEVICE FOR VEHICLE-MOUNTED DIESEL ENGINE**

(57)   An electronic control device (5) automatically stops an engine (1) when automatic stop conditions are established while the engine is being operated, and automatically starts the engine (1) when automatic start conditions are established after the engine is stopped. Further, an air amount estimate value (mcrnk), which represents the estimated air amount in a cylinder, is calculated on the basis of the operation state of the engine. A torque target value (TRtrg), which represents the target value of torque of the engine when the engine (1) is automatically started by the combustion of gas mixture of fuel and air corresponding to the air amount estimate value (mcrnk), is determined on the basis of the air amount estimate value (mcrnk). Further, when the engine is automatically started, a main injection timing target value (TMtrg) is determined such that the torque of the engine reaches the torque target value (TRtrg).

**Fig.2**

Fuel Injection Timing Control In Automatic Start

Read Cooling Water Temperature ThW, Outside Air Temperature ThS And Air Intake Pressure PM ~ S1

Calculate Air Density Dm Based On ThW, ThS And PM ~ S2

Calculate Air Amount Estimate Value mcrnk Present In Cylinder When Cranking Rotational Speed NEcrnk Is Obtained Based On Air Density Dm ~ S3

Calculate Reference Torque Estimate Value TRbase When Main Injection Is Carried Out At Reference Fuel Pressure Pbase At Reference Injection Timing TMI Based On Air Amount Estimate Value mcrnk ~ S4

Establish Automatic Start Condition Or During Automatic Start? ~ S5 — NO / YES

Read Fuel Pressure Pcr ~ S6

Set Fuel Pressure Correction Value Kp Based On Fuel Pressure Pcr ~ S7

Calculate Corrected Torque Estimate Value TRest Based On Reference Torque Estimate Value TRbase And Fuel Pressure Correction Value Kp ~ S8

Calculate, Based On Air Amount Estimate Value mcrnk, Torque Target Value TRtrg Capable Of Implementing Predetermined Start Time And Predetermined Exhaust Characteristic ~ S9

Calculate Injection Timing Correction Value Ktm Based On Corrected Torque Estimate Value TRest And Torque Target Value TRtrg ~ S10

Set Main Injection Timing Target Value TMtrg Based On Injection Timing Correction Value Ktm ~ S11

Execute Main Injection With Main Injection Timing Target Value TMGtrg ~ S12

End

**Description**

TECHNICAL FIELD

The present invention relates to a control device for a vehicle-mounted diesel engine that automatically stops the engine when automatic stop conditions are established when the engine is being operated, and automatically starts the engine when automatic start conditions are established after the engine has been automatically stopped.

BACKGROUND ART

A control device for a vehicle-mounted diesel engine of this type is described in Patent Document 1, for example. In a conventional general control device for a vehicle-mounted diesel engine including a technique as described in the Patent Document 1, when automatic stop conditions are established in which a vehicle is stopped, the brake pedal is stepped on, and the accelerator pedal is not stepped on, the engine is automatically stopped in order to reduce fuel consumption or the like. During the automatic stoppage of the engine, if a condition that the operation for stepping on the brake pedal is cancelled is met, the engine is automatically started. At the automatic start of the engine, for example, the amount of fuel injection is set based on the temperature of engine cooling water, and furthermore, fuel corresponding to the amount of the fuel injection is injected and supplied from a fuel injection valve into a cylinder at a predetermined time of fuel injection.

PRIOR ART DOCUMENT

Patent Document

Patent Document 1: Japanese Laid-Open Patent Publication No. 2006-307866

SUMMARY OF THE INVENTION

Problems that the Invention is to Solve

An operation state of an engine is varied each time automatic start of the engine is executed. For this reason, the following problems might be caused in a conventional control device. In the case in which the amount of air present in the cylinder is large, for example, combustion is apt to make progress. For this reason, there is a tendency that engine torque is increased and the time required for starting is thus shortened, while the amount of discharge of nitrogen oxide contained in exhaust air is increased. In the case in which the amount of air is small, combustion proceeds with difficulty. For this reason, there is a tendency for the engine torque to be reduced and the time required for starting is thus prolonged, while the amount of discharge of hydrocarbon contained in the exhaust air is increased. Accordingly, there is a problem in that the engine torque is precisely controlled with difficulty, the time required for starting cannot be controlled reliably or exhaust characteristics cannot be controlled reliably depending on the state of engine operation in automatic starting of the engine.

It is an objective of the present invention to provide a control device for a vehicle-mounted diesel engine that can precisely control engine torque to reach a target value irrespectively of engine operation state in automatic starting of the engine.

Means for Solving the Problems

In order to achieve the objective, a control device for a vehicle-mounted diesel engine according to the present invention serves to automatically stop the engine when an automatic stop condition is established during operation of the engine, and to automatically start the engine when an automatic start condition is established after automatic stop. The control device includes an air amount estimating means for estimating an air amount in a cylinder based on the engine operation state, an engine torque target value setting means for setting a target value of an engine torque at the automatic start of the engine by combustion of air-fuel mixture of oxygen and fuel corresponding to the air amount based on the air amount estimated by the air amount estimating means, and an injection timing setting means for setting a fuel injection timing in such a manner that the engine torque has the target value of the engine torque which is set by the engine torque target value setting means at the automatic start of the engine.

According to the configuration, the air amount in the cylinder is estimated based on the engine operation state, and the target value of the engine torque at the automatic start of the engine by the combustion of the air-fuel mixture corresponding to the air amount is set based on the estimated air amount. At the automatic starting of the engine, the fuel injection timing is set in such a manner that the engine torque achieves the target value. Accordingly, the engine torque can be precisely controlled to have the target value irrespective of the engine operation state at the automatic start of the engine.

For example, when the target value of the engine torque set to the estimated value of the air amount is set to be a maximum value, the combustion excessively makes progress so that time required for starting is considerably shortened, while the amount of discharge of nitrogen oxide contained in exhaust air is increased excessively. When the target value of the engine torque set to the estimated value of the air amount is a minimum value, the combustion progresses slowly so that the time required for starting is excessively prolonged, and furthermore, the amount of discharge of hydrocarbon contained in the exhaust air is increased excessively.

Therefore, the target value for the engine torque corresponding to the estimated value of the air amount is set to be an intermediate value between the maximum and minimum values of the engine torque that can be generated by the combustion of the estimated air amount. Consequently, the time required for starting can be shortened reliably, and furthermore, the amounts of discharge of both the nitrogen oxide and hydrocarbon contained in the exhaust air can be reduced reliably.

Moreover, the control device preferably further includes a torque estimating means for estimating an engine torque generated at the automatic start of the engine by combustion of air-fuel mixture of oxygen corresponding to the air amount and fuel supplied by a fuel injection at a predetermined injection timing based on the air amount estimated by the air amount estimating means. The injection timing setting means calculates an injection timing correction value for the predetermined injection timing based on a difference degree of the target value of the engine torque set by the engine torque target value setting means and the engine torque estimate value estimated by the torque estimating means, and sets a fuel injection timing based on the predetermined injection timing and the injection timing correction value.

According to the configuration, the engine torque generated at the automatic start of the engine by the combustion of the air-fuel mixture of the oxygen corresponding to the estimated air amount and the fuel supplied by the fuel injection at the predetermined injection timing is estimated based on the estimate value of the air amount. At the automatic start of the engine, the injection timing correction value corresponding to the predetermined injection timing is calculated based on the difference degree of the target value and the engine torque estimate value in such a manner that the engine torque has the target value, and the predetermined injection timing is corrected with the injection timing correction value to set the fuel injection timing. For this reason, in the case in which it is estimated that the air amount in the cylinder is large and the engine torque is greater than the target value by an execution of the fuel injection at the predetermined injection timing correspondingly, for example, the fuel injection timing is corrected to be retarded from the predetermined injection timing by a correction with the injection timing correction value. Consequently, the engine torque generated by the combustion of the air-fuel mixture is reduced. Therefore, the engine torque is controlled to have the target value. Moreover, in the case in which the air amount that presents in the cylinder is small and it is estimated that the engine torque is smaller than the target value by the execution of the fuel injection at the predetermined injection timing correspondingly, for example, the fuel injection timing is corrected to be advanced from the predetermined injection timing through the correction with the injection timing correction value. Consequently, the engine torque generated by the combustion of the air-fuel mixture is increased. Therefore, the engine torque is controlled to have the target value. Accordingly, the engine torque can be precisely controlled to have the target value irrespective of the engine operation state at the automatic start of the engine.

Moreover, the engine preferably further includes a fuel pressure sensor for detecting a fuel pressure, and the torque estimating means estimates the engine torque based on the fuel pressure detected by the fuel pressure sensor at the automatic start of the engine.

When the automatic stop period of the engine is prolonged, the pressure of the fuel present in the fuel supply system is reduced and the pressure of the fuel supplied by the fuel injection at the automatic start of the engine is reduced. For this reason, in the configuration in which the fuel injection timing is set directly from the engine torque estimated based on only the estimated air amount, for example, an atomization degree of the injected fuel, which greatly influences the engine torque, cannot be reflected by the estimation of the engine torque so that the engine torque cannot be estimated with high precision when the fuel pressure at the automatic start of the engine is different from a previously assumed magnitude. Therefore, there is a possibility that the engine torque cannot be caused to precisely reach the approximate target value at the fuel injection timing set by using the engine torque estimate value.

In this respect, according to the configuration, the engine torque is estimated based on both the estimated air amount and the detected fuel pressure. Accordingly, even if the fuel pressure at the automatic start of the engine is different from the previously assumed magnitude, for example, the engine torque can be estimated with high precision and then can be precisely controlled to achieve the target value.

In this case, the torque estimating means preferably estimates a reference engine torque generated in the fuel injection at a reference fuel pressure, and furthermore, estimates the engine torque by correcting the reference engine torque based on the fuel pressure detected by the fuel pressure sensor.

In addition, the torque estimating means preferably estimates an engine torque for setting a first fuel injection timing at the automatic start based on the fuel pressure detected by the fuel pressure sensor after the automatic start condition is established.

As described above, when the automatic stop period of the engine is prolonged, the pressure of the fuel present in a fuel supply system is reduced and the pressure of fuel supplied by the fuel injection at the automatic start of the engine is reduced. For this reason, it is preferable to detect the fuel pressure in a close timing to the first fuel injection timing when estimating the engine torque for setting the first fuel injection timing at the automatic start. In this respect, according to the configuration, the engine torque for setting the first fuel injection timing is estimated based on the fuel pressure, which is detected by the fuel pressure sensor after the establishment of the automatic start condition. Therefore, it is possible to estimate the engine torque with high precision.

Moreover, the air amount estimating means preferably estimates the air amount in the cylinder based on engine cooling water temperature.

When the engine cooling water temperature is low, an in-cylinder temperature at the automatic start is low if the other engine operation states are the same. When the in-cylinder temperature is low, the air amount in the cylinder is increased. According to the configuration, the air amount in the cylinder is estimated based on the engine cooling water temperature. Therefore, it is possible to estimate the air amount with high precision.

Furthermore, the air amount estimating means preferably estimates the air amount in the cylinder based on the outside air temperature.

When the outside air temperature is low, the in-cylinder temperature at the automatic start is low if the other engine operation states are the same. When the in-cylinder temperature is low, the air amount in the cylinder is large. According to the configuration, the air amount in the cylinder is estimated based on the outside air temperature. Therefore, it is possible to estimate the air amount with high precision.

Also in the case in which an outside air temperature is high and the engine cooling water temperature is low, the in-cylinder temperature at the automatic start is reduced as compared with the case in which the engine cooling water temperature is high. If the air amount in the cylinder is estimated based on both the engine cooling water temperature and the outside air temperature, therefore, it is possible to estimate the air amount with still higher precision.

Moreover, the air amount estimating means preferably estimates the air amount in the cylinder based on atmospheric pressure.

If the other engine operation states are the same, the lower the atmospheric pressure, the lower the in-cylinder pressure becomes at the automatic start. The higher the in-cylinder pressure, the greater the air amount becomes in cylinder. According to the configuration, the air amount in the cylinder is estimated based on the atmospheric pressure. Therefore, it is possible to estimate the air amount with high precision.

Also in the case in which the in-cylinder pressure at the automatic start is high and the in-cylinder temperature is high, the air amount in the cylinder is reduced as compared with the case in which the in-cylinder temperature is low. If the air amount in the cylinder is estimated based on at least one of the engine cooling water temperature and the outside air temperature and the atmospheric pressure, therefore, it is possible to estimate the air amount with still higher precision. In particular, if the air amount in the cylinder is estimated based on the engine cooling water temperature, the outside air temperature and the atmospheric pressure, it is possible to estimate the air amount with still higher precision.

Moreover, the torque estimating means preferably estimates the engine torque for each passage of a predetermined period after the automatic stop condition is established, and the injection timing setting means preferably sets a first fuel injection timing at the automatic start based on the estimated engine torque immediately before the automatic start condition is established when the condition is established.

According to the configuration, when the automatic stop condition is established so that the automatic stop of the engine is started, the engine torque is estimated based on the engine operation state at the time each passage for the predetermined period elapses. In the case in which the automatic start condition is established during the automatic stop of the engine, the first fuel injection timing at the automatic start is set based on the estimated engine torque immediately before. As compared with a control mode for starting the estimation of the engine torque after the establishment of the automatic start condition, consequently, it is possible to completely set the first fuel injection timing at the automatic start in an earlier stage and to shorten the time required from the establishment of the automatic start condition to the completion of the automatic start.

BRIEF DESCRIPTION OF THE DRAWINGS

Fig. 1 is a schematic view showing the structure of a control device for a vehicle-mounted diesel engine according to one embodiment of the present invention;
Fig. 2 is a flowchart showing a procedure of a processing for controlling a fuel injection timing in an automatic start of the engine in Fig. 1;
Fig. 3 is a map showing a relationship between an air amount estimate value and a reference torque estimate value in the engine of Fig. 1;
Fig. 4 is a map showing a relationship between fuel pressure and a fuel pressure correction value in the engine of Fig. 1;
Fig. 5 is a map showing a relationship between the air amount estimate value and a torque target value in the engine of Fig. 1; and
Fig. 6 is a map showing a relationship between a main injection timing target value and an injection timing correction value in the engine of Fig. 1.

MODES FOR CARRYING OUT THE INVENTION

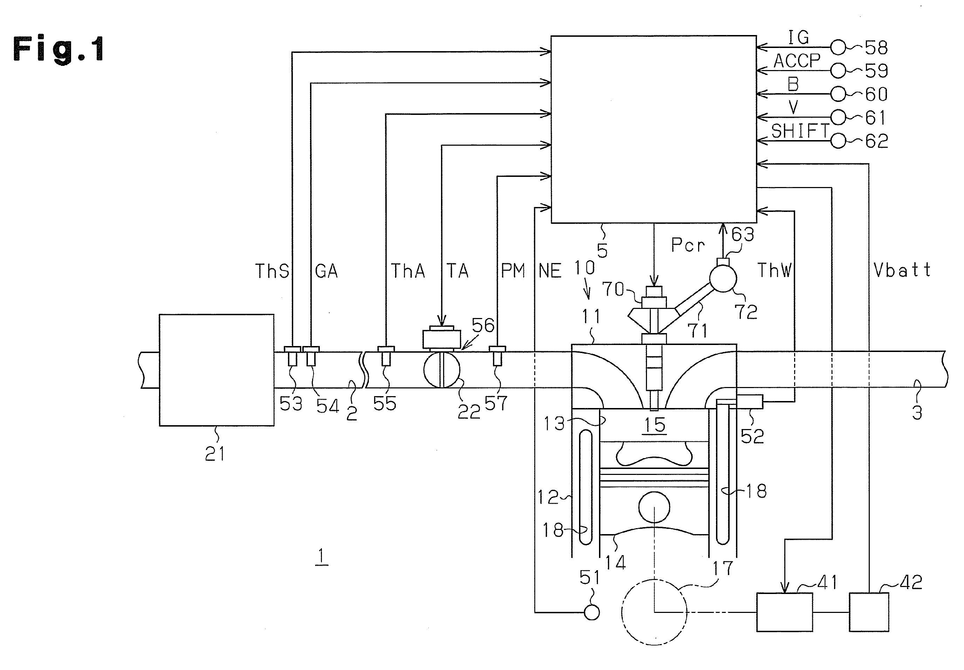

With reference to Figs. 1 to 6, a control device for a vehicle-mounted diesel engine according to one embodiment of the present invention will be described. In this embodiment, the control device is a control device for an in-line multi-cylinder diesel engine mounted on a vehicle.

Fig. 1 shows a schematic structure of a diesel engine (hereinafter referred to as an "engine") 1 and an electronic control device 5 serving as a control device for controlling the engine 1 according to the present embodiment. In Fig. 1, a longitudinal cross-sectional structure of a single cylinder is schematically shown.

As shown in Fig. 1, the engine 1 includes an engine body 10, an intake passage 2 for supplying intake air to the engine body 10, and an exhaust passage 3 for discharging exhaust from the engine body 10.

The intake passage 2 is provided with an air cleaner 21 for filtering foreign substance contained in intake air and a throttle valve 22 for regulating the intake air in that order from the upstream side of the air intake.

The engine body 10 includes a cylinder head 11 and a cylinder block 12. The cylinder block 12 is provided with a plurality of cylinders 13 and a piston 14 is reciprocatingly provided in the interior of each cylinder 13 (hereinafter referred to as "in the cylinder"). A combustion chamber 15 is defined by an inner peripheral surface of each cylinder 13, a top surface of the piston 14 and a surface opposed to the top surface of the piston 14 in the cylinder head 11. The intake passage 2 is connected to the combustion chamber 15 and the exhaust passage 3 is connected thereto. Moreover, an air intake valve (not shown) is provided between the intake passage 2 and the combustion chamber 15 to cause these to communicate with each other and disconnect them. Furthermore, an exhaust valve (not shown) is provided between the exhaust passage 3 and the combustion chamber 15 to cause these to communicate with each other and disconnect them.

Fuel injection valves 70 for injecting and supplying fuel into the combustion chambers 15 are provided in the cylinder head 11. Each fuel injection valve 70 corresponds to one of the cylinders 13. The fuel injection valves 70 are connected to a common rail 72 through fuel supply tubes 71. Fuel is supplied from a fuel pump (not shown) into the common rail 72, and high pressure fuel supplied from the fuel pump into the common rail 72 is distributed and supplied into each fuel injection valve 70 through each fuel supply tube 71 of each of the cylinders 13.

A crankshaft 17, which is an engine output shaft, is coupled to the pistons 14 through connecting rods (not shown). Moreover, a starter 41 is provided that is formed by an electric motor for carrying out cranking when the engine is started, and a battery 42 for supplying power to the starter 41 is provided.

The engine 1 is provided with a cooling water passage for circulating cooling water, and a water jacket 18 formed in the cylinder head 11 and the cylinder block 12 constitute a part of the cooling water passage.

In the engine 1 having the structure described above, when each piston 14 is moved downward and the air intake valve is opened in a state in which the exhaust valve is closed, intake air is supplied into the corresponding combustion chamber 15 via the intake passage 2 (an air intake stroke). When the air intake valve is closed and the piston 14 is moved upward so that intake air is compressed and fuel is injected and supplied from the fuel injection valve 70, then, the intake air and the fuel are mixed to be air-fuel mixture. When the piston 14 is moved further upward so that that the air-fuel mixture is compressed, and the temperature and the pressure of the air-fuel mixture are further raised, thereafter, the air-fuel mixture undergoes self ignition so that combustion is started (a compression stroke). When the pressure is raised with the combustion of the air-fuel mixture, subsequently, the piston 14 is moved downward so that the crankshaft 17 coupled to the piston 14 is rotated and driven (expansion stroke). Then, the exhaust valve is opened and the piston 14 is moved upward so that the air-fuel mixture subjected to the combustion, that is, exhaust air is discharged to the exhaust passage 3 (exhaust stroke).

A vehicle is provided with the electronic control device 5, which is constituted to have a microcomputer. Various controls including an engine control such as a fuel injection control of the engine 1 are carried out by the electronic control device 5. Detection signals sent from the following various sensors 51 to 63 provided in the engine 1 or the vehicle are input to the electronic control device 5.

[51] An engine rotational speed sensor 51, which is provided in the vicinity of the crankshaft 17 and detects the engine rotational speed NE, which is the rotational speed of the crankshaft 17;

[52] A water temperature sensor 52, which is provided on the cylinder head 11 and detects the temperature of cooling water in the engine 1 (hereinafter referred to as "cooling water temperature ThW");

[53] An outside air temperature sensor 53, which is provided between the air cleaner 21 and the throttle valve 22 in the intake passage 2, in more detail, close to the air cleaner 21 and detects the outside air temperature ThS, which is the temperature of intake air immediately after passage through the air cleaner 21;

[54] An intake air amount sensor 54, which is provided between the air cleaner 21 and the throttle valve 22 in the intake passage 2, in more detail, close to the air cleaner 21 and detects the intake air amount GA;

[55] An intake air temperature sensor 55, which is provided between the air cleaner 21 and the throttle valve 22 in the intake passage 2, in more detail, close to the throttle valve 22 and detects the intake air temperature ThA, which is the temperature of the intake air passing through the throttle valve 22;

[56] The throttle opening degree sensor 56, which is provided in the vicinity of the throttle valve 22 and detects a throttle opening degree TA, which is the opening degree of the throttle valve 22;

[57] The air intake pressure sensor 57, which is provided on the downstream side of the throttle valve 22 in the intake passage 2 and detects the air intake pressure PM, which is the pressure of intake air;

[58] The ignition switch 58 for switching between an engine starting command (IG = "ON") and an engine stopping command (IG = "OFF");

[59] The accelerator depression degree sensor 59 for detecting an accelerator depression degree ACCP, which is the stepping amount of the accelerator pedal (depression amount);

[60] The brake switch 60 for detecting the stepping degree B of the brake pedal (depression degree);

[61] The vehicle speed sensor 61 for detecting the vehicle speed V, which is the travel speed of the vehicle;

[62] The shift position sensor 62 for detecting the shift position SHIFT of the transmission (not shown);

[63] The fuel pressure sensor 73 for detecting the fuel pressure in the common rail 72.

Moreover, various information such as a battery voltage Vbatt is input to the electronic control device 5.

When the ignition switch 58 is operated from "OFF" to "ON" (hereinafter referred to as an "ON operation") so that the engine starting command is output, the electronic control device 5 turns ON the starter 41 to drive the starter 41 and to inject fuel from the fuel injection valves 70, thereby controlling the start of the engine 1. When the ignition switch 58 is operated from "ON" to "OFF" (hereinafter referred to as an "OFF operation") to output the engine stopping command, the electronic control device 5 stops the injection of the fuel from the fuel injection valve 70 to control stopping of the engine 1.

In order to achieve reduction in fuel consumption or the like, the electronic control device 5 stops fuel injection from the fuel injection valves 70 on the assumption that the engine stopping command is output to the engine 1, thereby carrying out automatic stop control for automatically stopping the engine 1, when automatic stop conditions are established even if the OFF operation of the ignition switch 58 is not performed.

In the present embodiment, it is determined whether the automatic stop conditions are established or not depending on whether all of the following conditions (a) to (d) are established or not, for example.

  (a) The shift position SHIFT is the neutral position or the drive position.
  (b) The vehicle speed V is equal to or lower than a predetermined value.
  (c) The accelerator depression degree ACCP is 0.
  (d) The brake pedal is stepped on (depressed).

If all of the conditions (a) to (d) are established, it is assumed that the automatic stop conditions are established so that automatic stop of the engine 1 is executed.

In the case in which the automatic start conditions are established even if the ON operation of the ignition switch 58 is not carried out during the automatic stop of the engine 1, the starter 41 is turned ON on the assumption that the engine starting command is output to the engine 1, and the automatic start control for automatically starting the engine 1 is thus performed.

If any of the conditions (a) to (d) is not established, the automatic start of the engine 1 is executed on the assumption that the automatic stop conditions are not established, that is, the automatic start conditions are established.

In the fuel injection control of the engine 1, a main injection for generating an engine torque is carried out from the compression stroke to the expansion stroke, and furthermore, a pilot injection is performed prior to the main injection in order to raise the in-cylinder temperature in the main injection.

The engine operation state at the automatic start of the engine 1 is varied at each moment. In a conventional control device, therefore, there is a possibility that the following problems might be caused. In the case in which the amount of air present in the cylinder is large, for example, the combustion is apt to make progress. For this reason, there is a tendency in that an engine torque is increased so that a time required for the start is shortened, while the amount of discharge of nitrogen oxides contained in exhaust air is increased. In the case in which the amount of the air is small, the combustion proceeds with difficulty. For this reason, there is a tendency for the engine torque to be reduced, the time required for starting is prolonged and the amount of discharge of hydrocarbon contained in exhaust air is increased. Accordingly, there is conventionally a possibility that problems might be caused, for example, engine torque cannot be controlled precisely, the time required for starting cannot be controlled reliably or exhaust characteristics cannot be controlled reliably depending on the engine operation state in automatic starting of the engine 1.

In the present embodiment, therefore, the amount of the air present in the cylinder is estimated based on the engine operation state, and furthermore, a target value of the engine torque at the automatic start of the engine 1 through combustion of air-fuel mixture of oxygen and fuel corresponding to the amount of the air is set based on the estimated amount of the air. A fuel injection timing is set in such a manner that the engine torque has the target value of the engine torque at the automatic start of the engine 1. Consequently, the engine torque is precisely controlled to have the target value irrespective of the engine operation state at automatic start of the engine 1.

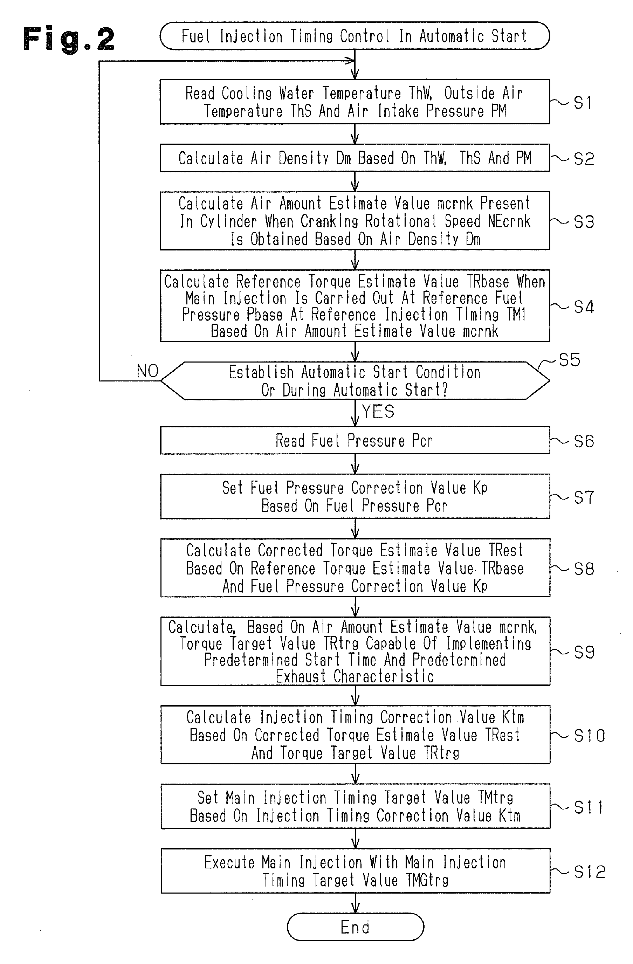

With reference to Figs. 2 to 6, fuel injection timing control for automatic start will be described.

Fig. 2 is a flowchart showing a procedure for a fuel injection timing control at the automatic start. A series of processes shown in the flowchart is repetitively executed every predetermined period by means of the electronic control device 5 during the period from stoppage of the operation of the engine 1 through the automatic stop control of the engine 1 to a complete explosion state of the engine 1 through the automatic start control of the engine 1. When it is determined that the engine rotational speed NE is equal to or higher than a complete explosion determination speed NEth, it is determined that the engine 1 is set into the complete combustion state.

As shown in Fig. 2, in the series of processes, the electronic control device 5 first reads the current cooling water temperature ThW, outside air temperature ThS and air intake pressure PM (Step S1). Next, air density Dm, which is the density of the air present in the cylinder, is calculated based on the cooling water temperature ThW, the outside air temperature ThS and the air intake pressure PM, which has been read (Step S2). The in-cylinder temperature is estimated based on the cooling water temperature ThW and the outside air temperature ThS. More specifically, the in-cylinder temperature is estimated with reference to a map defining a relationship between the cooling water temperature ThW and outside air temperature ThS and the in-cylinder temperature. The map is set in advance through experimentation or the like. Based on the estimate value of the in-cylinder temperature and the air intake pressure PM, which is an in-cylinder pressure, the air density Cm in the cylinder is estimated by using a known physical model. In other words, referring to the known physical model, the air density Dm is calculated to be high if the in-cylinder temperature is low, and is calculated to be high if the in-cylinder pressure is high. The cooling water temperature ThW, the outside air temperature ThS and the air intake pressure PM in the present embodiment correspond to an engine cooling water temperature, an outside air temperature and an atmospheric pressure according to the present invention, respectively.

Next, an amount mcrnk (hereinafter referred to as an air amount estimate value) of air present in the cylinder with the engine rotational speed NE set to be a cranking rotational speed NEcrnk is calculated based on the air density Dm, which has been calculated (Step S3). In the present embodiment, the air amount estimate value mcrnk is calculated from the air density Dm by using an arithmetic expression defining the relationship between the estimated air density Dm and the air amount estimate value mcrnk. A map is set in advance through experimentation or the like. Moreover, the air amount estimate value mcrnk may be calculated by using a map or an arithmetic expression that directly defines the relationship between the cooling water temperature ThW, the outside air temperature ThS and the air intake pressure PM and the air amount estimate value mcrnk in place of a mode for calculating the air amount estimate value mcrnk according to the present embodiment.

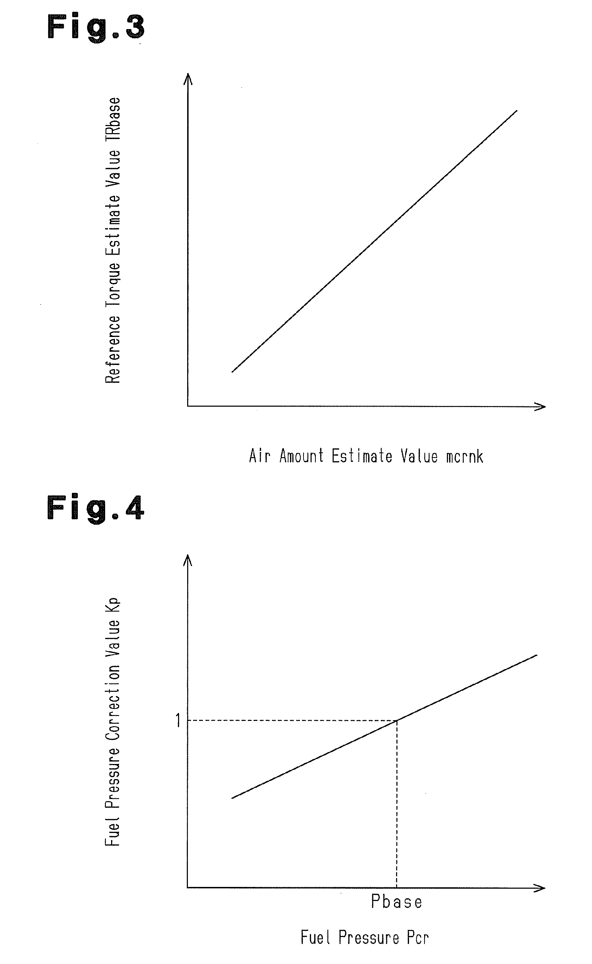

Subsequently, an engine torque (hereinafter referred to as a reference torque estimate value) TRbase generated in a fuel injection at a reference fuel pressure Pbase at a reference injection timing TM1 is calculated based on the air amount estimate value mcrnk, which has been calculated (Step S4). More specifically, the reference torque estimate value TRbase is calculated to be greater when the air amount estimate value mcrnk is increased, with reference to a map shown in Fig. 3. The map is set in advance through experimentation or the like.

When the reference torque estimate value TRbase is thus calculated, the electronic control device 5 determines whether the automatic start conditions are established or not and whether the automatic start is being carried out or not (Step S5). If the automatic start conditions are not established and the automatic start is not being carried out (Step S5 : "NO"), it is determined that the point in time for setting the main injection timing target value TMtrg is not reached, and the processing proceeds to the previous Step S1.

On the other hand, if the automatic start conditions are established or the automatic start is being carried out at the Step S5 (Step S5: "YES"), a current fuel pressure Pcr value is then read (Step S6). Subsequently, a fuel pressure correction value Kp is set based on the fuel pressure Pcr (Step S7). More specifically, referring to a map as shown in Fig. 4, the fuel pressure correction value Kp is set to be greater if the fuel pressure Pcr is higher. If the fuel pressure Pcr is the reference fuel pressure Pbase, the fuel pressure correction value Kp is set to be "1".

Next, a corrected torque estimate value TRest is calculated based on the reference torque estimate value TRbase and the fuel pressure correction value Kp (Step S8). As shown in the following equation (1), the reference torque estimate value TRbase is multiplied by the fuel pressure correction value Kp to calculate the corrected torque estimate value TRest.

$$TRest = TRbase \times Kp \quad ...(1)$$

Consequently, the corrected torque estimate value TRest is reflected in the fuel pressure Pcr read at the previous Step S6. In other words, when the fuel pressure correction value Kp is greater, the corrected torque estimate value TRest is calculated to be greater. If the fuel pressure correction value Kp is "1", that is, if the fuel pressure Pcr is the reference fuel pressure Pbase, the reference torque estimate value TRbase is calculated as the corrected torque estimate value TRest.

Description will be given of the reason why the reference torque estimate value TRbase is corrected by the fuel pressure correction value Kp, that is, the reason why the torque estimate value is corrected. In other words, if the automatic stop period of the engine 1 is prolonged, a pressure of fuel present in fuel supply systems such as the common rail 72, the fuel supply tubes 71 and the fuel injection valves 70 is reduced and the pressure of fuel to be supplied by a fuel injection at the automatic start of the engine 1 is reduced. For this reason, the following problem is caused in a structure in which a main injection timing target value is set directly from a torque estimate value calculated based on only the estimated air amount mcrnk, that is, a reference torque estimate value, for example. In other words, in the case in which the fuel pressure at the automatic start of the engine 1 is different from a previously assumed magnitude, atomization degree of the injected fuel, which greatly influences the engine torque, cannot be reflected in the calculation of the torque estimate value. Consequently, the torque estimate value cannot be calculated with high precision. For this reason, there is a possibility that the engine torque cannot be caused to approximate to a target value even if the main injection timing target value set by using the torque estimate value is utilized.

When the automatic stop period of the engine 1 is prolonged, the pressure of the fuel present in the fuel supply system is reduced and the pressure of the fuel supplied by the fuel injection at the automatic start of the engine 1 is reduced. For this reason, it is preferable to detect the pressure of the fuel in a close timing to a first main injection timing when the corrected torque estimate value TRest for setting a first main injection timing target value TMtrg at the automatic start of the engine 1 is to be calculated.

In the present embodiment, therefore, the torque estimate value TRest for setting the first main injection timing target value TMtrg is calculated based on a fuel pressure Pcr detected by the common rail pressure sensor 63 after an automatic start condition is established in order to calculate the corrected torque estimate value TRest with high precision.

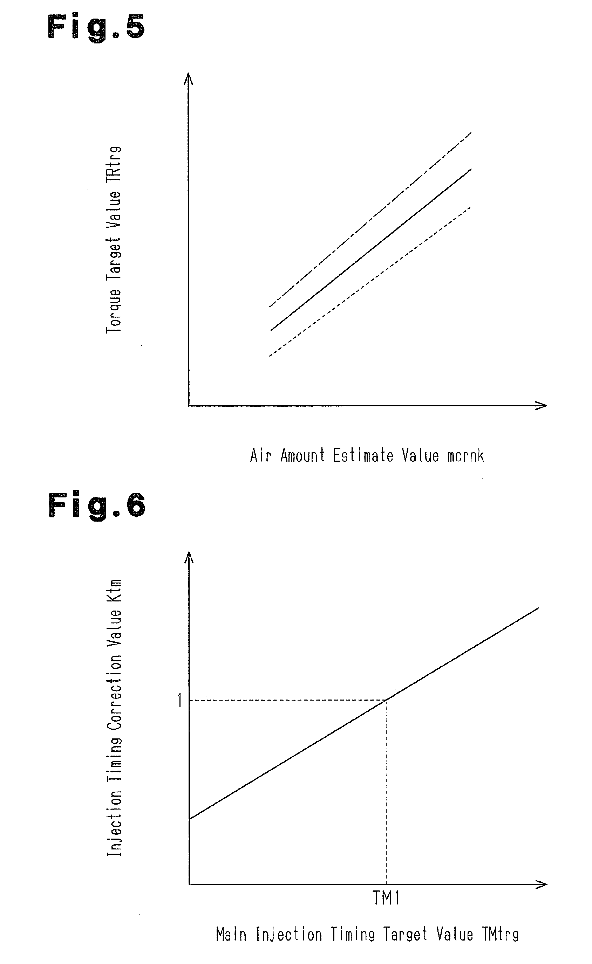

When the corrected torque estimate value TRest is calculated at the Step S8, a target value of the engine torque (hereinafter referred to as a torque target value) TRtrg is then calculated based on the air amount estimate value mcrnk calculated at the previous Step S3 (Step S9). More specifically, the torque target value TRtrg capable of implementing a predetermined start time and a predetermined exhaust characteristic through the combustion of the air-fuel mixture corresponding to the air amount estimate value mcrnk is calculated by referring to a map shown in a solid line of Fig. 5.

When the torque target value TRtrg set to the air amount estimate value mcrnk is caused to be a maximum value of the engine torque which can be generated by the combustion of the air-fuel mixture corresponding to the air amount estimate value mcrnk as indicated by the line formed by a long dash alternating with a short dash in Fig. 5, for example, a time required for starting is considerably shortened, while the amount of discharge of a nitrogen oxide contained in an exhaust air is increased excessively. When the torque target value TRtrg set to the air amount estimate value mcrnk is caused to be a minimum value of the engine torque which might be generated by the combustion of the air-fuel mixture corresponding to the air amount estimate value mcrnk as shown in a broken line of Fig. 5, for example, a time required for starting is excessively prolonged, and furthermore, the amount of discharge of hydrocarbon contained in the exhaust air is increased excessively.

In the present embodiment, therefore, the torque target value TRtrg corresponding to the air amount estimate value mcrnk is set to be an intermediate value between the maximum and minimum values of the engine torque that can be generated by the combustion of the air-fuel mixture corresponding to the air amount estimate value mcrnk. Thus, the time required for starting is shortened reliably, and furthermore, the amounts of discharge of both the nitrogen oxide and the hydrocarbon that are contained in the exhaust air are reduced reliably. The map is set in advance through experimentation or the like.

Next, an injection timing correction value Ktm is calculated based on the corrected torque estimate value TRest and the torque target value TRtrg (Step S10). As expressed in the following equation (2), the corrected torque estimate value TRest is divided by the torque target value TRtrg to calculate the injection timing correction value Ktm.

$$Ktm = TRest / TRtrg \qquad ...(2)$$

Subsequently, the main injection timing target value TMtrg is set based on the injection timing correction value Ktm (Step S11). More specifically, the main injection timing target value TMtrg is set to a retarded timing when the injection timing correction value Ktm is increased by referring to the map shown in Fig. 6. Moreover, in the case in which the injection timing correction value Ktm is "1", that is, the corrected torque estimate value TRest is equal to the torque target value TRtrg, the main injection timing target value TMtrg is set to be the reference injection timing TM1.

When the main injection timing target value TMtrg is set, thus, main injection is then executed with the set main injection timing target value TMtrg (Step S12) and the series of processes is once ended.

According to the fuel injection timing control at the automatic start in accordance with the present embodiment, in the case in which it is estimated that the air amount mcrnk present in the cylinder is large and the corrected torque estimate value TRest is correspondingly larger than the torque target value TRtrg through the execution of the fuel injection at the reference injection timing TM1, for example, the injection timing correction value Ktm is set to be smaller than "1". Accordingly, the main injection timing target value TMtrg is corrected to be retarded from the reference injection timing TM1. Consequently, the engine torque generated by the combustion of the air-fuel mixture is reduced. Therefore, the engine torque is controlled to achieve the torque target value TRtrg. Moreover, in the case in which it is estimated that the air amount mcrnk present in the cylinder is small and the corrected torque estimate value TRest is smaller than the torque target value TRtrg through the execution of the fuel injection at the reference injection timing TM1 correspondingly, for example, the injection timing correction value Ktm is set to be greater than "1". Accordingly, the main injection timing target value TMtrg is corrected to be advanced from the reference injection timing TM1. Consequently, the engine torque generated by the combustion of the air-fuel mixture is increased. Therefore, the engine torque is controlled to reach the torque target value TRtrg.

The electronic control device 5 according to the present embodiment corresponds to an air amount estimating means, a torque target value setting means, an injection timing setting means and a torque estimating means according to the present invention. According to the control device for a vehicle-mounted diesel engine according to the present embodiment described above, the following advantages are obtained.

(1) The electronic control device 5 is set to automatically stop the engine 1 when the automatic stop conditions are established during the engine operation, and to automatically start the engine 1 when the automatic start conditions are established during an automatic stop. Moreover, the air amount estimate value mcrnk, which is an air amount that is estimated to be present in the cylinder, is calculated based on the engine operation state, and the torque target value TRtrg, which is a target value of the engine toque at the automatic start of the engine 1 through the combustion of the air-fuel mixture of oxygen and fuel that corresponds to the air amount estimate value mcrnk, is set based on the air amount estimate value mcrnk. The main injection timing target value TMtrg is set in such a manner that the engine torque has the torque target value TRtrg at the automatic start of the engine. More specifically, the torque estimate value TRest, which is the engine torque estimated to be generated at the automatic start of the engine 1 by the combustion of the air-fuel mixture of the oxygen corresponding to the air amount estimate value mcrnk and the fuel supplied by the fuel injection at the predetermined injecting time TM1, is calculated based on the air amount estimate value mcrnk. Moreover, the injection timing correction value Ktm corresponding to the predetermined injection timing TM1 is calculated based on a difference degree of the torque estimate value TRest from the torque target value TRtrg, and furthermore, the main injection timing target value TMtrg is set based on the predetermined injection timing TM1 and the injection timing correction value Ktm. Consequently, the engine torque can be precisely controlled to have a target value irrespective of the engine operation state at the automatic start of the engine 1.

Moreover, the torque target value TRtrg corresponding to the air amount estimate value mcrnk is set to be the intermediate value between the maximum and minimum values of the engine torque that can be generated by the combustion of the air-fuel mixture corresponding to the air amount estimate value mcrnk. Consequently, the time required for starting can be shortened reliably and the amounts of discharge of both the nitrogen oxide and the hydrocarbon contained in the exhaust air can be reduced reliably.

(2) There is provided for the common rail a pressure sensor 63 for detecting fuel pressure Pcr in the common rail 72, and the torque estimate value TRest is calculated based on the fuel pressure Pcr detected by the common rail pressure sensor 63 at the automatic start of the engine 1. More specifically, the reference torque estimate value TRbase generated in the fuel injection at the reference fuel pressure Pbase is estimated, and furthermore, the reference torque estimate value TRbase is corrected based on the fuel pressure Pcr detected by the common rail pressure sensor 63 to calculate the corrected torque estimate value TRest. Consequently, the corrected torque estimate value TRest is calculated based on both the air amount estimate value mcrnk and the fuel pressure Pcr. Accordingly, even if the fuel pressure Pcr at the automatic start of the engine 1 is different from a previously assumed magnitude, for example, the corrected torque estimate value TRest can be calculated with high precision so that the engine torque can be precisely controlled to reach a target value.

(3) The corrected torque estimate value TRest for setting the first main injection timing target value TMtrg at the automatic start is calculated based on the fuel pressure Pcr detected by the common rail pressure sensor 63 after the automatic start conditions are established. Consequently, the torque estimate value TRest can be calculated with high precision.

(4) The air amount estimated value mcrnk is calculated based on the cooling water temperature ThW, the outside air temperature ThS and the air intake pressure PM. When the cooling water temperature ThW is low and the outside air temperature ThS is low, the in-cylinder temperature at the automatic start is reduced if the other engine operation states are the same. In other words, also in the case in which the outside air temperature ThS is high and the cooling water temperature ThW is low, the in-cylinder temperature at the automatic start is reduced as compared with the case in which the cooling water temperature ThW is high. When the in-cylinder temperature at the automatic start is low, the air amount in the cylinder is increased. When the air intake pressure PM is low, the in-cylinder pressure at the automatic start is reduced if the other engine operation states are the same. When the in-cylinder pressure at the automatic start is high, the air amount in the cylinder is increased. In other words, also in the case in which the in-cylinder pressure at the automatic start is high and the in-cylinder temperate is high, the air amount in the cylinder is decreased as compared with the case in which the in-cylinder temperature is low. In this respect, according to the embodiment, the air amount estimate value mcrnk is calculated based on the cooling water temperature ThW, the outside air temperature ThS and the air intake pressure PM. Therefore, the air amount estimate value mcrnk can be calculated with high precision.

(5) After the automatic stop conditions are established, the reference torque estimate value TRbase is calculated for every passage of a predetermined period. When the automatic start conditions are established, the first main injection timing target value TMtrg at the automatic start is set based on the reference torque estimate value TRbase estimated immediately before the establishment of the automatic start conditions. Consequently, as compared with a control mode in which a calculation of the torque estimate value is started after the automatic start conditions are established, for example, the first main injection timing target value TMtrg at the automatic start can be set completely in an earlier stage and time required from the establishment of the automatic start condition to the completion of the automatic start can be shortened by a greater amount.

The control device for a vehicle-mounted diesel engine according to the present invention is not restricted to the structure illustrated in the embodiment, but it may also be implemented as in the following modifications, in which changes are made as necessary.

According to the above described embodiment, in order to complete setting of the first main injection timing target value TMtrg at an early stage, it is desirable to calculate the reference torque estimate value TRbase for every passage of a predetermined period after the automatic stop conditions are established and to set the first main injection timing target value TMtrg at the automatic start based on the reference torque estimate value TRbase, which is estimated immediately before the establishment of the automatic start conditions, when the automatic start conditions are established. If the time required for setting the first main injection timing target value TMtrg does not matter, however, it is also possible to estimate the air amount estimate value mcrnk based on the cooling water temperature ThW, the outside air temperature ThS and the air intake pressure PM after the establishment of the automatic start conditions, and furthermore, to calculate the reference torque estimate value TRbase based on the air amount estimate value mcrnk.

Although the in-cylinder temperature is estimated based on the cooling water temperature ThW or the outside air temperature ThS in the embodiment, a temperature sensor for directly detecting the in-cylinder temperature may be instead provided.

In the above described embodiment, the density Dm of the air amount in the cylinder is estimated based on the in-cylinder temperature and the in-cylinder pressure. In a vehicle to be used in only an environment in which a change in an atmospheric pressure can be disregarded, however, it is also possible to estimate the air density Dm based on only the in-cylinder temperature by regarding the in-cylinder pressure to have a certain value.

According to the above described embodiment, in order to calculate the torque estimate value TRest for the first main injection with high precision, it is desirable to calculate the corrected torque estimate value TRest for setting the first main injection timing target value TMtrg at the automatic start based on the fuel pressure Pcr detected by the common rail pressure sensor 63 after the establishment of the automatic start conditions. However, a timing for detecting the fuel pressure Pcr is not restricted thereto, but the fuel pressure Pcr may be detected for every passage of a predetermined period and the corrected torque estimate value TRest may be calculated based on the fuel pressure Pcr after the automatic stop conditions are established, for example. When the automatic start conditions are established, the first main injection timing target value TMtrg can also be set based on the corrected torque estimate value TRest, which is estimated immediately before the establishment of the automatic start conditions.

In this case, it is possible to calculate the corrected torque estimate value TRest at a time based on the air amount estimate value mcrnk and the fuel pressure Pcr.

According to the above described embodiment, in order to calculate the corrected torque estimate value TRest with high precision, it is desirable to calculate the torque estimate value TRest based on the fuel pressure Pcr detected by the common rail pressure sensor 63 at the automatic start of the engine 1 even if the fuel pressure Pcr at the automatic start of the engine 1 is different from a previously assumed magnitude. In the case in which an automatic stop period of the engine 1 is shorter than a predetermined period, however, it is possible to disregard a drop in the pressure of the fuel present in a fuel supply system. For this reason, in the case in which the automatic stop period is shorter than the predetermined period, for example, it is also possible to estimate the engine torque based on only the air amount estimate value mcrnk by regarding the fuel pressure Pcr to have a certain value.

In the above described embodiment, the torque estimate value TRest, which is the engine torque generated at the automatic start of the engine 1 by the combustion of the air-fuel mixture of the oxygen corresponding to the air amount estimate value mcrnk and the fuel supplied by the fuel injection at the predetermined injection timing TM1, is calculated based on the air amount estimate value mcrnk, and the injection timing correction value Ktm corresponding to the predetermined injection timing TM1 is calculated based on the difference degree of the torque target value TRtrg and the torque estimate value TRest. The main injection timing target value TMtrg is set based on the predetermined injection timing TM1 and the injection timing correction value Ktm. However, the main injection timing target value according to the present invention, that is, a setting mode for the fuel injection timing is not restricted thereto.

In brief, if the air amount in the cylinder is estimated based on the engine operation state, and furthermore, the target value of the engine torque at the automatic start of the engine by the combustion of the air-fuel mixture of the oxygen and the fuel corresponding to the air amount is set based on the estimated air amount and the fuel injection timing is set in such a manner that the engine torque has the target value at the automatic start of the engine, it is possible to optionally change the setting mode for the fuel injection timing.

**Claims**

1. A control device for a vehicle-mounted diesel engine, wherein the device automatically stops the engine when an automatic stop condition is established during operation of the engine, and automatically starts the engine when an automatic start condition is established during the automatic stop, the control device being **characterized by**:

   an air amount estimating means for calculating, based on an operation state of the engine, an air amount estimate value, which is an air amount estimated to be present in a cylinder of the engine;
   a torque target value setting means for setting, based on the air amount estimate value, a torque target value, which is a target value of an engine torque by combustion of air-fuel mixture of oxygen and fuel corresponding to the air amount estimate value at the automatic start of the engine; and
   an injection timing setting means for setting an injection timing target value of the fuel in such a manner that the engine torque reaches the torque target value at the automatic start of the engine.

2. The control device for a vehicle-mounted diesel engine according to claim 1, further comprising a torque estimating means, wherein
   the torque estimating means calculates, based on the air amount estimate value, a torque estimate value, which is an engine torque estimated to be generated at the automatic start by combustion of air-fuel mixture of the oxygen corresponding to the air amount estimate value and fuel supplied by fuel injection at a predetermined injection timing, and
   the injection timing setting means calculates an injection timing correction value corresponding to the predetermined injection timing based on a difference degree of the torque estimate value with respect to the torque target value, and sets the injection timing target value based on the predetermined injection timing and the injection timing correction value.

3. The control device for a diesel engine according to claim 2, wherein
   the engine further includes a fuel pressure sensor for detecting fuel pressure, and
   at the automatic start, the torque estimating means calculates the torque estimate value based on the detected fuel pressure.

4. The control device for a vehicle-mounted diesel engine according to claim 3, wherein the torque estimating means
   calculates a reference torque estimate value, which is estimated to be generated when fuel injection is carried out at a reference fuel pressure, and
   calculates, based on the detected fuel pressure, a corrected torque estimate value by correcting the reference torque estimate value.

5. The control device for a vehicle-mounted diesel engine according to claim 3 or 4, wherein the torque estimating means calculates a corrected torque estimate value for setting the first injection timing target value at the automatic start based on the fuel pressure detected after the automatic start condition is established.

6. The control device for a vehicle-mounted diesel engine according to any one of claims 1 to 5, wherein the air amount estimating means calculates the air amount estimate value based on engine cooling water temperature.

7. The control device for a vehicle-mounted diesel engine according to any one of claims 1 to 6, wherein the air amount estimating means calculates the air amount estimate value based on outside air temperature.

8. The control device for a vehicle-mounted diesel engine according to any one of claims 1 to 7, wherein the air amount estimating means calculates the air amount estimate value based on atmospheric pressure.

9. The control device for a vehicle-mounted diesel engine according to any one of claims 2 to 8, wherein the torque estimating means calculates the torque estimate value every passage of a predetermined period after the automatic stop condition is established, and
   the injection timing setting means sets a first injection timing target value at the automatic start based on the torque estimate value immediately before the establishment of the automatic start condition when the condition is established.

**Amended claims under Art. 19.1 PCT**

1. amended) A control device for a vehicle-mounted diesel engine, wherein the device automatically stops the engine when an automatic stop condition is established during operation of the engine, and automatically starts the engine when an automatic start condition is established during the automatic stop, the control device being **characterized by**:

an air amount estimating means for calculating, based on an operation state of the engine, an air amount estimate value, which is an air amount estimated to be present in a cylinder of the engine;
a torque target value setting means for setting, based on the air amount estimate value, a torque target value, which is a target value of an engine torque by combustion of air-fuel mixture of oxygen and fuel corresponding to the air amount estimate value at the automatic start of the engine; and
a torque estimating means for calculating, based on the air amount estimate value, a torque estimate value, which is an engine torque estimated to be generated at the automatic start by combustion of air-fuel mixture of the oxygen corresponding to the air amount estimate value and fuel supplied by fuel injection at a predetermined injection timing, and
an injection timing setting means for setting an injection timing target value of the fuel in such a manner that the engine torque reaches the torque target value at the automatic start of the engine, wherein the injection timing setting means calculates an injection timing correction value corresponding to the predetermined injection timing based on a difference degree of the torque estimate value with respect to the torque target value, and sets the injection timing target value based on the predetermined injection timing and the injection timing correction value.

2. amended) The control device for a diesel engine according to claim 1, wherein
the engine further includes a fuel pressure sensor for detecting fuel pressure, and
at the automatic start, the torque estimating means calculates the torque estimate value based on the detected fuel pressure.

3. amended) The control device for a vehicle-mounted diesel engine according to claim 2, wherein the torque estimating means
calculates a reference torque estimate value, which is estimated to be generated when fuel injection is carried out at a reference fuel pressure, and
calculates, based on the detected fuel pressure, a corrected torque estimate value by correcting the reference torque estimate value.

4. amended) The control device for a vehicle-mounted diesel engine according to claim 2 or 3, wherein the torque estimating means calculates a corrected torque estimate value for setting the first injection timing target value at the automatic start based on the fuel pressure detected after the automatic start condition is established.

5. amended) The control device for a vehicle-mounted diesel engine according to any one of claims 1 to 4, wherein the air amount estimating means calculates the air amount estimate value based on engine cooling water temperature.

6. amended) The control device for a vehicle-mounted diesel engine according to any one of claims 1 to 5, wherein the air amount estimating means calculates the air amount estimate value based on outside air temperature.

7. amended) The control device for a vehicle-mounted diesel engine according to any one of claims 1 to 6, wherein the air amount estimating means calculates the air amount estimate value based on atmospheric pressure.

8. amended) The control device for a vehicle-mounted diesel engine according to any one of claims 1 to 7, wherein the torque estimating means calculates the torque estimate value every passage of a predetermined period after the automatic stop condition is established, and
the injection timing setting means sets a first injection timing target value at the automatic start based on the torque estimate value immediately before the establishment of the automatic start condition when the condition is established.

9. cancelled)

**Fig.1**

EP 2 508 736 A1

**Fig.2**

( Fuel Injection Timing Control In Automatic Start )

Read Cooling Water Temperature ThW, Outside Air
Temperature ThS And Air Intake Pressure PM ～S1

Calculate Air Density Dm Based On ThW, ThS And PM ～S2

Calculate Air Amount Estimate Value mcrnk Present
In Cylinder When Cranking Rotational Speed NEcrnk
Is Obtained Based On Air Density Dm ～S3

Calculate Reference Torque Estimate Value TRbase When
Main Injection Is Carried Out At Reference Fuel
Pressure Pbase At Reference Injection Timing TM1
Based On Air Amount Estimate Value mcrnk ～S4

NO ⟨ Establish Automatic Start Condition
Or During Automatic Start? ⟩ ～S5

↓YES

Read Fuel Pressure Pcr ～S6

Set Fuel Pressure Correction Value Kp
Based On Fuel Pressure Pcr ～S7

Calculate Corrected Torque Estimate Value TRest
Based On Reference Torque Estimate Value TRbase
And Fuel Pressure Correction Value Kp ～S8

Calculate, Based On Air Amount Estimate Value mcrnk,
Torque Target Value TRtrg Capable Of Implementing
Predetermined Start Time And Predetermined
Exhaust Characteristic ～S9

Calculate Injection Timing Correction Value Ktm
Based On Corrected Torque Estimate Value TRest
And Torque Target Value TRtrg ～S10

Set Main Injection Timing Target Value TMtrg
Based On Injection Timing Correction Value Ktm ～S11

Execute Main Injection With Main Injection
Timing Target Value TMGtrg ～S12

( End )

# Fig.3

Air Amount Estimate Value mcrnk

# Fig.4

Fuel Pressure Pcr

# Fig.5

Air Amount Estimate Value mcrnk

# Fig.6

Main Injection Timing Target Value TMtrg

| INTERNATIONAL SEARCH REPORT | International application No. |
|---|---|
| | PCT/JP2009/070192 |

**A. CLASSIFICATION OF SUBJECT MATTER**
*F02D17/00*(2006.01)i, *F02D41/06*(2006.01)i, *F02D45/00*(2006.01)i

According to International Patent Classification (IPC) or to both national classification and IPC

**B. FIELDS SEARCHED**

Minimum documentation searched (classification system followed by classification symbols)
F02D17/00, F02D41/06, F02D45/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2008-223600 A (Nissan Motor Co., Ltd.),<br>25 September 2008 (25.09.2008),<br>entire text; fig. 19 to 29<br>(Family: none) | 1,6-8<br>2-5,9 |
| A | JP 2007-263043 A (Toyota Motor Corp.),<br>11 October 2007 (11.10.2007),<br>claims; paragraph [0013]<br>(Family: none) | 1-9 |
| A | JP 2001-041089 A (Mazda Motor Corp.),<br>13 February 2001 (13.02.2001),<br>paragraphs [0041] to [0043]<br>(Family: none) | 1-9 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 December, 2009 (17.12.09) | 28 December, 2009 (28.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/070192

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-169999 A  (Toyota Motor Corp.), 29 June 2006 (29.06.2006), claims 8, 10 & EP 1830057 A1          & WO 2006/064891 A1 | 1-9 |
| A | JP 2006-307866 A  (Toyota Motor Corp.), 09 November 2006 (09.11.2006), entire text; all drawings (Family: none) | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006307866 A